# EUROPEAN PATENT SPECIFICATION

(11) **EP 4 311 878 B1**
(45) Date of publication and mention of the grant of the patent: **03.09.2025**
(21) Application number: 23187612.9
(22) Date of filing: 25.07.2023
(51) Int. Cl.: E01C 19/26, B62D 12/00, E01C 19/28, E02D 3/032

(54) **COMPACTION MACHINE STEERING SYSTEM**
VERDICHTUNGSMASCHINENLENKSYSTEM
SYSTÈME DE DIRECTION DE MACHINE DE COMPACTAGE

(30) Priority: 28.07.2022 US 202217876050
(43) Date of publication of application: 31.01.2024
(73) Proprietor: Wacker Neuson America Corporation, Menomonee Falls, WI 53051 (US)
(72) Inventor: KNUTSON, Donovan, Slinger, 53086 (US); HENSCH, Andrew, West Allis, 53227 (US)
(74) Representative: Müller Hoffmann & Partner

(56) References cited:
- EP-B1- 0 935 024
- CA-A1- 2 440 940
- CN-B- 101 934 819
- CN-B- 108 216 364
- CN-B- 111 845 931
- DE-A1- 102016 106 459
- DE-A1- 19 646 082
- DE-T2- 69 715 322
- DE-U1- 9 208 777
- US-A1- 2020 114 957
- US-B1- 9 267 245

## Description

### BACKGROUND OF THE INVENTION

### 1. Field of the Invention

The present invention relates to remote controlled compaction machines such as trench rollers and, more particularly, relates to a compaction machine with improved remote control capabilities and to a method of operating such a machine.

### 2. Discussion of the Related Art

Compaction machines are used in a variety of ground compaction and ground leveling applications. Most compaction machines have supports in the form of plates or rollers that rest on the surface to be compacted, and most of these supports are excited to vibrate so as to compact and level a worked surface. These machines are commonly referred to as "vibratory compactors."

A common vibratory compactor, and one to which the invention is well-suited, is a vibratory trench roller. The typical vibratory trench roller includes a chassis supported on the surface to be compacted by front and rear rotating drum assemblies. Each drum assembly supports a respective subframe of the chassis. In the case of an articulated trench roller, the subframes are coupled to one another by a pivot connection. Each of the drum assemblies may include a stationary axle housing and a drum that is mounted on the axle housing and that is driven to rotate by a dedicated hydraulic motor. Hydraulic motors are typically supplied with pressurized hydraulic fluid from a pump which may be powered by an engine or electric motor mounted on one of the subframes.

Each drum may be excited to vibrate by a dedicated exciter assembly that is located within the associated subframe and is powered by a motor connected to a pump. Each exciter assembly typically comprises one or more eccentric masses mounted on a rotatable shaft positioned within the subframe. Rotation of the eccentric shaft imparts vibrations to the subframe and to the remainder of the drum assembly. The entire machine may be configured to be as narrow as possible so as to permit the machine to fit within a trench whose floor is to be compacted. Machine widths of less than 3 feet (1 meter) are common. Vibratory trench rollers of this basic type are disclosed, e.g., in U.S. Pat. Nos. 4,732,507 to Artzberger; 4,793,735 to Paukert; 5,082,396 to Polacek; 7,059,802 to Geier et al.; and 8,585,317 to Sina; and 10,047,500 to Geier et al. Further technological background can be found in US 2020/114957 A1, US 9 267 245 B1, CN 108 216 364 B, DE 196 46 082 A1, DE 92 08 777 U1, DE 697 15 322 T2 and EP 0 935 024 B1. DE 10 2016 106459 A1 relates to a skid loader wherein the steering angle can be limited.

Vibratory trench rollers often are controlled remotely using a transmitter on a remote controller that transmits infrared (IR), Radio, or other signals to the trench roller. The control signal is generated by manipulation of a joystick and/or other controls on the remote controller and controls operation of the machine. For example, an operator uses a single axis joystick to control hydraulic cylinder extension or retraction from a neutral or central direction. Joystick movement in one direction from a center position extends the hydraulic cylinder to steer in one direction (left or right), while movement in the other direction retracts the hydraulic cylinder to steer in the other direction (right or left).

The articulated trench roller, however, has no feedback that can be used to determine its direction of travel. Unlike in most other driving systems, the articulated trench roller will continue traveling at the last commanded angle. If the machine was turning, it will continue to turn. This constant turn might not be desirable in many instances.

Additionally, the articulated trench roller further does not provide any feedback to the operator that the hydraulic cylinder has reached the maximum travel or its "stroke limit" in either direction. The operator can therefore attempt to extend the hydraulic cylinder past its stroke limit in either direction, resulting in unnecessary strain on the hydraulic system power and efficiency losses as the excessive hydraulic flow is directed over the relief valve.

There is therefore a need to provide a method of providing feedback regarding the direction the articulated trench roller is traveling.

There is additionally a need to provide feedback regarding whether the stroke limit of the actuator effecting the turn is reached.

The need additionally has arisen to return the steering actuator of an articulated trench roller to the neutral position in the absence of a steering command signal to cause the machine to automatically return to straight-line travel.

### SUMMARY OF THE INVENTION

In accordance with an aspect of the invention, a compaction machine, such as a vibratory trench roller, is provided in communication with a remote control. The compaction machine includes a mobile chassis having a first and second subframes pivotably connected to each other via a pivot connection, one or more steering actuators (hereafter collectively and individual referred to as a steering actuator) extending between the first and second subframes and configured to pivot the first and second subframes about the pivot connection to steer the machine, a steering angle sensor configured to provide data indicative of a machine steering angle, and a control unit in communication with the steering angle sensor and the steering actuator to determine an operational stroke of the steering actuator. The remote control includes a direction control and a transmitter configured to transmit an operator-generated steering command from the direction control to the control unit of the compaction machine. The control unit is configured to control the steering actuator based on the operator-generated steering command from the direction control and the determined machine angle as determined by the steering angle sensor.

In accordance with the invention, the control unit is configured to determine, based on the input from steering angle sensor, whether the steering actuator is at a limit of its operational stroke. If so, the control unit is configured to override commands from the direction control that otherwise would attempt to alter the machine steering angle beyond that the limit of the operational stroke of the steering actuator.

In another possible aspect of the invention, the control unit is configured to automatically return the steering actuator to a neutral position in the absence of a steering command signal.

In accordance with another aspect of the invention, the steering angle sensor is a position sensor that is disposed at or adjacent to the pivot connection and that is configured to sense an angular orientation of the pivot connection. In turn, the controller is configured to determine the stroke of the steering actuator based on the sensed angular orientation of the pivot connection.

In accordance with yet another aspect of the invention, the compaction machine may include at least one receiver configured to receive the input from the direction control and to transmit the input from the direction control to the control unit.

In accordance with yet another aspect of the invention, in instances in which there is no input from the direction control, the machine control unit may instruct the hydraulic cylinders to return to or maintain a neutral position to straighten out the compaction machine's direction of travel
The steering actuator may be a hydraulic cylinder. In this case, the compaction machine further includes a source of pressurized hydraulic fluid, a reservoir, and a control valve that controls fluid flow between the hydraulic cylinder, the source of pressurized hydraulic fluid, and the reservoir. The control unit operates the control valve to control the operational stroke of the hydraulic cylinder. Further yet, the control valve may be an on/off hydraulic solenoid valve as opposed to a proportional flow control valve.

Also disclosed is a method of operating a compaction machine having at least some of the features described above.

These and other features and advantages of the invention will become apparent to those skilled in the art from the following detailed description and the accompanying drawings. It should be understood, however, that the detailed description and specific examples, while indicating preferred embodiments of the present invention, are given by way of illustration and not of limitation. Many changes and modifications may be made within the scope of the present invention.

### BRIEF DESCRIPTION OF THE DRAWINGS

Exemplary embodiments of the invention are illustrated in the accompanying drawings in which like reference numerals represent like parts throughout, and in which:
FIG. 1 is an isometric view of a vibratory trench roller constructed in accordance with an embodiment of the invention;
FIG. 2 is a top plan view of the trench roller of FIG. 1;
FIG. 3 is a side elevation view of a trench with the trench roller of FIGS. 1 and 2 positioned therein;
FIG. 4 is a front elevation view of the trench roller of FIGS. 1-3 shown with control signals reflecting to and from an operator;
FIG. 5 is a schematic diagram of the trench roller of FIGS. 1-3 and an associated remote control usable by the operator; and
FIG. 6 is a flowchart showing a process for steering the trench roller of FIGS. 1-3.

### DETAILED DESCRIPTION OF THE PREFERRED EMBODIMENTS

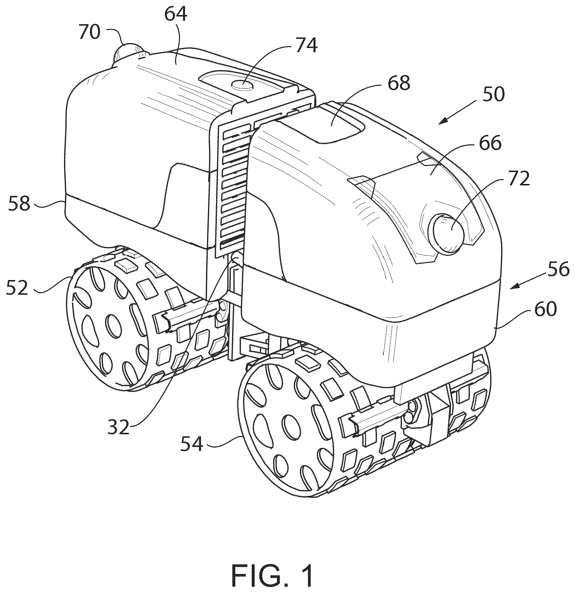

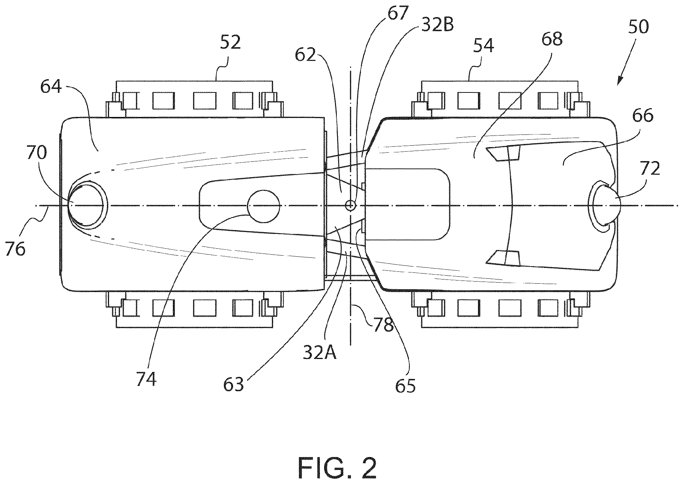

Referring now to the drawings, and initially to FIGS. 1 and 2, an exemplary compaction machine 50 is illustrated that is constructed in accordance with an embodiment of the present invention. The machine 50 of this embodiment is a vibratory trench roller 50. The vibratory trench roller 50 includes a self-propelled machine controlled by a remote control 22. The machine 50 includes a first, front rotating drum assembly 52 and a second, rear rotating drum assembly 54. It is typically used to compact the bottom of trenches prior to laying pipelines or the like and/or to compact recently filled trenches. The machine 50 includes an articulated chassis 56 having a first, front subframe 58 and a second, rear subframe 60. The front and rear subframes 58 and 60 are connected to one another via a pivot connection 62 and are supported on the ground via the front and rear drum assemblies 52 and 54, respectively. The pivot connection is preferably oriented along a longitudinal centerline 76 of the machine 50, which is shown in FIG. 2 as the front and rear subframes 58, 60 are colinear indicative of the machine 50 traveling in a straight line. When the machine 50 is turning, at least one of the front and rear subframes 58, 60 is pivoted about the pivot connection 62 to deviate from the longitudinal centerline 76. The longitudinal centerlines of the two subframes 58 and 60 nevertheless intersect at the pivot connection 62.

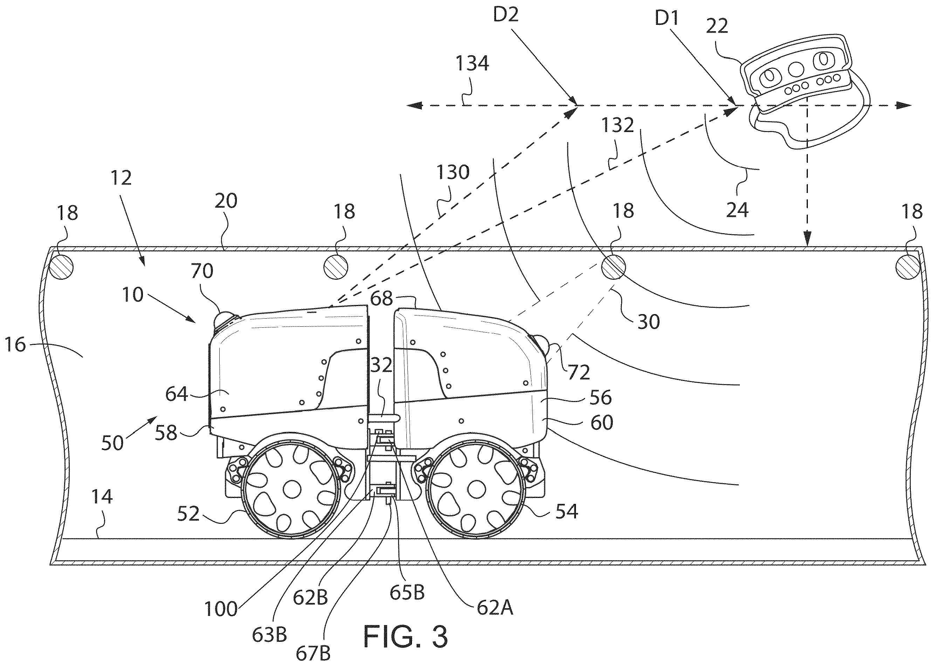

As shown in FIGS. 2 and 3, the pivot connection 62 is formed from an upper pivot 62A and a lower pivot 62B. The pivots 62A and 62B are identical to one another. The following discussion of "pivot connection 62" applies equally to both pivots 62A and 62B unless otherwise noted .

Still referring to FIGS 2 and 3, pivot connection 62 includes first and second ear mounts 63, 65 extending rearwardly from the rear of the front subframe 58, forwardly from the front of the rear subframe 60, respectively, and a pivot pin 67 extending vertically through aligned bores in the front and rear ear mounts 63, 65. Articulation and, thus, steering, occurs about the pin 67. A sensor also is provided to measure the steering angle of the machine, i.e., the angular orientation of the font subframe 60 relative to the rear subframe 58. In the present embodiment, the steering angle sensor takes the form of a position sensor 100 disposed so as to measure the angular orientation of the front and rear subframes 58, 60 about the pivot connection 62. In the representative embodiment of the invention, the position sensor 100 is located on the upper pivot 62A, however, it may be located at the lower pivot 62B. Other embodiments of the invention may include any number of pivot connections 62. As a result, the position sensor 100 may be located at any of the pivot connections 62 of the machine 50. Further aspects of the position sensor 100 are described below.

The machine 50 is steered by at least one steering actuator 32 extending between the front and rear subframes 58, 60 along one or more lines offset from the center of the pivot axis of the articulated subframes 58, 60 and the pivot connection 62. In the representative embodiment of the invention, the steering actuator 32 is in the form of two double acting hydraulic cylinders 32A, 32B disposed on opposed sides of the longitudinal centerline 76. Extension and retraction of the hydraulic cylinders 32A, 32B causes the subframes 58, 60 to pivot relative to one another, thereby steering the machine 50. Alternative embodiments of the invention may use a single hydraulic steering cylinder 32 that extends and retracts to cause the subframes 58, 60 to pivot about the pivot connection 62. Yet other embodiments of the invention, may include a steering actuator 32 other than a hydraulic cylinder, for example, a pneumatic actuator or other electromechanical actuators. The hydraulic cylinders 32A and 32B are mirror images of one another. All discussion of hydraulic cylinders 32 herein apply equally to both hydraulic cylinders 32A and 32B unless otherwise noted.

Because the angular orientation of the pivot connection 62 is indicative of the stroke of the hydraulic steering cylinder 32, the position sensor 100 is able to provide data indicative of the stroke of the hydraulic steering cylinder 32 based on the angular orientation of the pivot connection 62. In other embodiments of the invention, the position sensor 100 may be located in other locations, such as, but not limited to, on the hydraulic steering cylinder 32 to measure the stroke of the hydraulic steering cylinder 32. Further yet, the position sensor 100 may be in the form GPS sensors position on the front and rear subframes 58, 60 that measure the relative orientation and position of the front and rear subframes 58, 60 and, in turn, measure the resulting stroke of the hydraulic steering cylinder 32. In sum, the position sensor 100 is configured to provide data regarding the steering angle of the machine 50 and/or the stroke of the hydraulic steering cylinder 32 - one being dependent on the other.

The chassis 56 may have a narrow width, such as about 20 inches (50 cm) wide, to permit the machine 10 to be used to compact the bottom of relatively narrow trenches for laying pipeline and the like. The front subframe 58 may support a prime movere (not shown) accessible via a hood 64. The prime mover may, for example, be a gasoline engine, a diesel engine, or an electric motor. The term "engine" as used herein is understood to apply to these and any other suitable prime movers. Either subframe 58 or 60 may support a control system for the machine 50 as well as an enclosed storage compartment accessible via a pivotable cover 66 on a rear hood 68. In the present case, the front subframe supports the control system. As is generally understood in the art, each of the front and rear drum assemblies 52 and 54 may be excited to vibrate by a dedicated exciter assembly (not shown) that is powered by a drive system. Each exciter assembly typically comprises one or more eccentric masses (not shown) mounted on a rotatable shaft(s) (not shown) positioned within an axle housing. Rotation of each eccentric mass imparts vibrations to the associated axle housing and, in turn, to the remainder of the drum assembly. In this way, the front and rear rotating drum assemblies 52 and 54 are operable to compact the ground.

The machine 50 includes at least one receiver for receiving signals from a transmitter on the remote control device 22. The receiver may be a transceiver that both sends and receives signals. In the present example in which the machine 50 is controlled by RF or another line of sight signal, the machine 50 includes receivers or eyes 70, 72 located at the front and rear ends of the machine 50, respectively. In the representative embodiment of the invention, a supplemental third receiver or eye 74 is provided at a location between the first and second eyes 70, 72.

Each of the eyes 70, 72, and 74 of the illustrated embodiment is an IR photodetector. However, each eye 70, 72, 74 could be configured to detect signals in other spectrums in addition not or instead of signals transmitted in the IR spectrum. In varying embodiments of the invention, the trench roller 50 may include any number of eyes distributed between the front and rear subframes 58, 60. Each of the eyes 70, 72, and 74 includes a receiver and related circuitry forming a module within the machine 50.

Electronics of the machine 50 receive signals from the eyes 70, 72, and 74 to start and stop the machine 50, to control propulsion and steering of the machine 50 in a desired (forward or reverse) direction, and to control the machine's exciter assemblies.

Alternatively, the transmitter may transmit a radio signal or another signal that does not require line of sight, and the receiver may be configured to receive that signal.

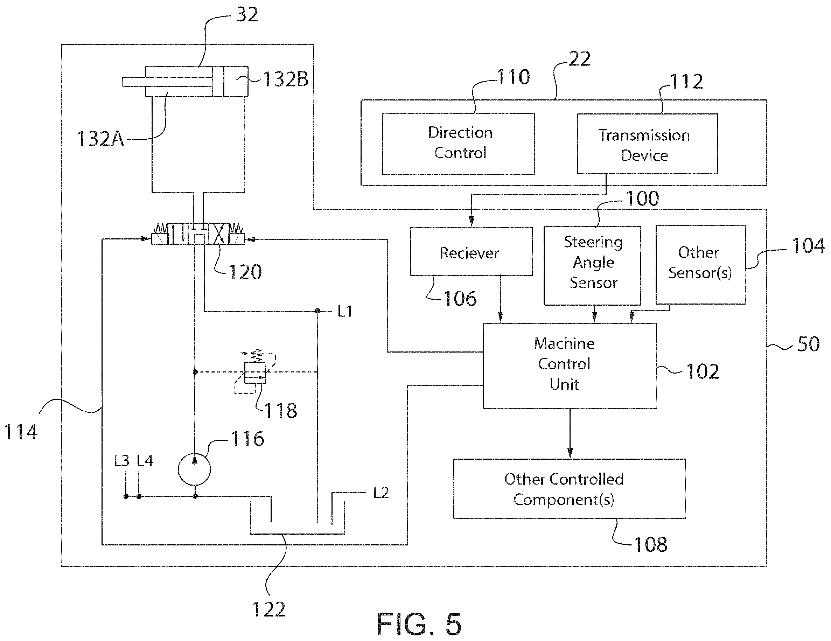

The machine 50 is controlled by an operator 84 via a hand-held remote control device 22 that transmits signals to the receiver on the machine. In the present example, the transmitted signal is an IR signal 24. However, as mentioned above, the signal could be radio signal or another signal that need not rely on line of sight. The remote control 22 can be actuated to control some or all operating parameter of the machine. For example, it can be used to start and stop the engine. It also can be used to control the FORWARD/REVERSE direction of machine travel and to steer the machine 50, using a direction control 110 such as joysticks on the remote control 22. Remote control 22 also can be used to control the machine's vibrations as generated by the exciters, including at least an "ON/OFF" control and possibly including controlling vibration intensity as well such as via a "HIGH/LOW" control. The IR signal 24 can be set to one of several different control channels in order to allow multiple machines to operate in the same area without interference from one another. This function can be controlled, for example, by a channel selection switch on the remote control 22. The remote control 22 performs these functions by transmitting an IR signal 24 from a transmission device 112 (FIG. 5). The transmitted signal 24 propagates from the remote control 22 in an expanding arc until it impinges on the machine 50. The signal 24 is received by one or more of the eyes 70, 72, and 74 on the machine 50, transmitted to the machine's circuitry, and decoded to execute the commands transmitted by the remote control 22.

FIG. 3 depicts the machine 50 disposed within a trench 12 including reinforcement or "trench shoring" that often takes the form of vertical reinforcing sheets or walls 16 located along each side wall of the trench 12. A number of cross supports 18 extend laterally between the walls 16 near a top edge 20 of the trench 12. In the instance shown in FIG. 3, the front eye 70 is outside of the second reception zone of the remote control 22 because it is not within the arc of the IR signal 24. In addition, the rear eye 72 is in a dead zone consisting of the shadow located downstream of one of the cross supports 18 in the direction of IR signal propagation. The dead zone is bordered by the line 30 in FIG. 3. However, even though transmission to the rear eye 72 is blocked by the obstruction 18, the machine 50 nevertheless continues to be controlled because the signal 24 is still received by the third eye 74, which is positioned in a common reception zone with the second eye 72.

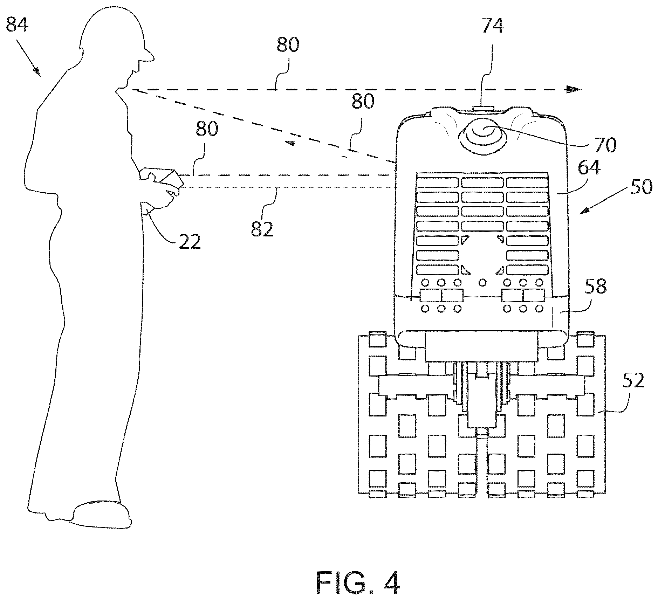

Referring now to FIG. 4, the remote control 22 may be configured to transmit two separate signals simultaneously. The first signal 80 is a relatively high-intensity control signal 80 having a range on the order of 50-60 ft (15-20 m). This signal is often called a far field signal. The second signal 82 is a relatively low-intensity safety signal 82 having a range of about 6.6 ft (2 m). This signal often is called a near field signal. The safety or near field signal 82 may be generated whenever the remote control 22 is active and causes the machine 50 to cease moving and vibrating upon machine receipt of the safety signal 82 via one or more of the eyes 70, 72, 74. The machine 50 thus stops moving and vibrating if an operator 84 is located in a safety zone of about a 2 m radius from the machine 50.

Referring next to FIG. 5, a schematic diagram of the machine 50 and the remote control 22 and their respective internal components is shown. The machine 50 includes a machine control unit 102 configured to interact with sensors 104, such as the position sensor 100. Other sensor(s) 104 may be included to provide information concerning the operational status of the machine 50, the compaction state of the surface being compacted, etc. The machine control unit 102 is also in communication with one or more receivers 106, such as eyes 70, 72, 74, that receive a signal from the remote control 22. The machine control unit 102 is configured to use signals from the sensors 104 and/or the receiver 106 to control the hydraulic steering cylinder 32 and other controlled components 108 of the machine 50, such as the motor and rollers 52, 54.

The remote control 22 includes a direction control 110, typically in the form of a joystick. However, other alternatives of the invention may include other direction controls, such as, but not limited to levers, buttons, toggle switches, etc. The remote control 22 further includes transmission device 112 which, as stated above, is configured to transmit a signal generated by the direction control 110 to the machine 50. As discussed above, the signal may be received by the eyes 70, 72, 74 and/or an alternative receiver 106 and relayed to the control unit 102. It is contemplated that a separate control device may also be included in the remote control 22 to receive inputs from the direction control 102 and generate the signal(s) transmitted by the transmission device 112. The above-described machine control unit 102 and any such control device may be integrated into any other components discussed above within or exterior to the machine 50 and/or the remote control 22.

FIG. 5 further illustrates the actuator 32 in the form of hydraulic cylinders with an associated hydraulic circuit 114. A single hydraulic circuit 114 may control operation of both hydraulic steering cylinders 32A and 32B (shown as a single hydraulic steering cylinder 32 in FIG. 5) and the other components of the machine 50 operated by hydraulic pressure via lines L1, L2, L3, and L4 of the hydraulic circuit 114. A pump 116 and a reservoir or tank 122 within the hydraulic circuit 114 are able to provide the necessary hydraulic pressure to L1, L2, L3, L4 in order to operate the components of the machine 50. The hydraulic circuit 114 also includes a relief valve 118.

The hydraulic steering cylinder 32 is shown as having first and second fluid chambers 132A and 132B. A valve 120 is disposed at the hydraulic steering cylinder 32 in order to control hydraulic fluid flow into and out of the chambers 132A and 132B to extend and retract the hydraulic steering cylinder 32. The illustrated valve is a three way, three position electronically-actuated solenoid valve. It could be a proportional control valve, which would permit variation of the operating speed of the hydraulic cylinder. However, a less expensive valve lacking proportional control capability, such as an on/off solenoid valve, could be used as well for reasons detailed below. In the illustrated position, the valve 120 isolates both chambers 132A, 132B from the pump 116 and the reservoir 122 to hydraulically lock the hydraulic steering cylinder 32 in position. In order to extend the hydraulic steering cylinder 32, the valve 120 is switched to a position in which fluid flows into the chamber 132B from the pump 116 and flows out of the chamber 132A toward the reservoir 122. Conversely, in order to retract the hydraulic steering cylinder 32, the valve 120 is switched to a position in which fluid flows into the chamber 132A from the pump 116 and flows out of the chamber 132B toward the reservoir 122.

As described above, the machine control unit 102 is configured to use data received from the sensors 104 and/or signals received by the receiver 106 to control the hydraulic steering cylinder 32. More specifically, the machine control unit 102 sends control signals to the hydraulic solenoid valve 120 to control the stroke of the hydraulic steering cylinder 32 and, therefore, to effect steering of the machine 50.

As stated above, the receiver 106 is configured to receive signals from the remote control 22 and, more specifically, signals indicative of user input in the direction control 110 of the remote control 22. For example, in response to the operator 84 moving the direction control 110 to the right or left, the remote control 22 sends a signal to the machine control unit 102 that the operator 84 wants the machine 50 to steer to the right or left, respectively. In turn, the machine control unit 102 can control the valve 120 to adjust the stroke of the steering cylinder 32 to adjust the steering angle of the machine 50.

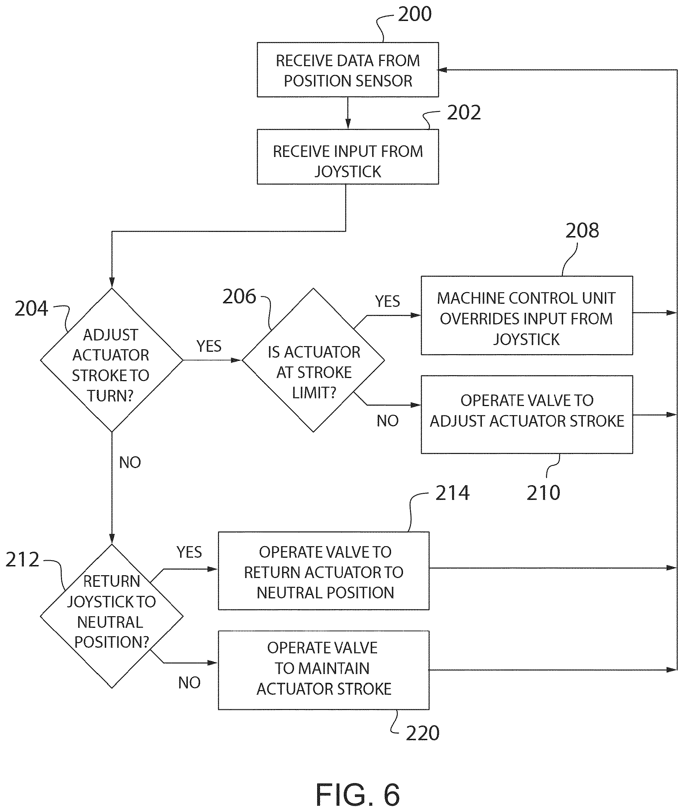

The instruction from the machine control unit 102 to the valve 120 is based on both the input from the operator 84 on the remote control 22 and input of the position sensor 100. The position sensor data is indicative both of the steering angle of the machine 50 and the stroke of the steering cylinder 32. The machine control unit 102 can use this data as feedback to control steering cylinder 32 operation to achieve the directional control commanded by the existing control (joystick) stroke. For instance, and as will be described later with respect to FIG. 6, the machine control unit 102 is able to determine whether the stroke of the steering cylinder 32 needs to be adjusted (either extended or retracted) to adjust the steering angle of the machine 50 to match the operator-generated steering command of the direction control 110. Additionally, when the direction control 110 of the remote control 22 returns to neutral, the machine control unit 102 is configured to adjust the stroke of the steering cylinder 32 to a neutral position that causes straight-ahead travel, preventing undesired turns.

The machine control unit 102 is also able to use the data received from the position sensor 100 to determine whether the steering cylinder 32 is disposed at a limit of its stroke, which may be either a maximum (fully-extended) or minimum (fully-retracted) stroke. This can be a simple mathematically calculation based on a known correlation between machine steering angle as measured by position sensor 100 and steering cylinder position. In a situation in which the operator actuates the direction control 110 to request an additional change in steering angle in a given direction when the steering cylinder 32 stroke is at a limit, i.e., is fully extended or retracted, the machine control unit 102 overrides the command from the remote control 22 and belays the transmission of an instruction to the valve 120 to adjust fluid flow into and out of the chambers 132A, 132B to attempt to alter the stroke of the steering cylinder 32. As a result, the machine control unit 102 prevents an unnecessary buildup of pressure within the steering cylinder 32, which would normally result in activation of the relief valve 118 and a resulting significant draw of mechanical power from the engine to operate the relief valve 118. By preventing attempted over-steering and a need for activation of the relief valve 118, the machine 50 is able to maintain efficient use of the mechanical power of the engine without employing a proportional control valve as the valve 120.

Now referring to FIG. 6, a flowchart is shown depicting the control of the machine 50 by the machine control unit 102 based on an operator-generated steering command received from the remote control 22 and data received from the position sensor 100. The process begins at blocks 200 and 202, which may happen in any order or simultaneously. In block 200, the machine control until 102 receives data from the position sensor 100. As stated above, the data received from the position sensor 100 is indicative of the steering angle of the machine 20 as reflected, directly or indirectly, by the angular orientation of the pivot connection 62 between the first and second subframes 58, 60. In block 202, the machine control unit 102 receives the operator-generated steering command input from the direction control 110 of remote control 22.

In block 204, the machine control unit 102 determines whether the stroke of the hydraulic steering cylinder 32 needs to be adjusted (extended or retracted) in response to the data received from the position sensor 100 and the operator-generated steering command input received from the direction control 110. Where, as here, steering is controlled by a joystick, a change in joystick stroke generates a command to adjust hydraulic steering cylinder stroke. If the machine control unit 102 determines that the stroke of the hydraulic steering cylinder 32 needs to be adjusted to adjust the turning radius, the process moves to block 206, wherein the machine control unit 102 determines whether the stroke of the hydraulic steering cylinder 32 is at an operational limit (maximum stroke or minimum stroke). As previously discussed, the machine control unit 102 is able to determine the stroke of the hydraulic steering cylinder 32 using the steering angle determined using data from the position sensor 100. If the machine control unit 102 determines that the stroke of the hydraulic steering cylinder 32 is at an operational limit, the process proceeds to block 208, where the machine control unit 102 overrides the command from the joystick to prevent the valve 120 from attempting to adjust the stroke of the hydraulic steering cylinder 32. By preventing an attempt to adjust the stroke of the hydraulic steering cylinder 32 beyond its operational limit, the machine control unit 102 is able to prevent activation of the relief valve 118 and maintain the efficiency of the machine 50. After block 208, the process returns to blocks 200 and 202 to continue efficient operation of the machine 50. Returning to block 206, if the machine control unit 102 determines that the stroke of the hydraulic steering cylinder 32 is not at an operational limit, the process continues to block 210, in which the control unit 102 operates the valve 120 to adjust the stroke of the hydraulic steering cylinder 32 in response to the change in joystick position. The routine then returns to blocks 200 and 202.

Returning to block 204, if the machine control unit 102 determines that the steering angle does not need to change and the stroke of the hydraulic steering cylinder 32 thus does not need to be adjusted, the process moves to block 212. In block 212, the machine control unit 102 determines whether the directional joystick has returned to its neutral position, either under active control by the operator or automatically upon release by the operator. If so, the process proceeds to block 214, where the control unit 102 operates the valve 120 to return the hydraulic steering cylinder 32 to its neutral position, resulting in straight-line travel.

Returning back to block 212, if the machine control unit 102 continues determines that the joystick has not returned to its neutral position, and thus as not changed since block 200, the process proceeds to block 22 where the machine control unit 102 operates the valve 120 to maintain the existing stroke of the hydraulic steering cylinder 32. As a result, if the operator-generated steering command input is indicative of wanting the maintain the existing turning radius of the machine 50, the machine control unit 102 is able to maintain the existing position of the hydraulic steering cylinder 32 in order to maintain the turning radius of the machine 50. The process then returns to blocks 200 and 202.

While decision blocks 204, 206, 212 are shown in a specific order, it is contemplated that these decision blocks may occur in any order to result in the same outcomes identified in the flowchart of FIG. 6.

Although the best mode contemplated by the inventors of carrying out the present invention is disclosed above, practice of the above invention is not limited thereto. It will be manifest that various additions, modifications, and rearrangements of the features of the present invention may be made without deviating from the scope of the appended claims.

It should be appreciated that such a development effort might be complex and time consuming, but would nevertheless be a routine undertaking of design, fabrication, and manufacture for those of ordinary skill in the art having the benefit of this disclosure. Nothing in this application is considered critical or essential to the present invention unless explicitly indicated as being "critical" or "essential".

## Claims

1. A compaction machine system comprising:
a compaction machine (50) including:
a mobile chassis (56), the mobile chassis (56) including a first subframe (58) pivotably connected to a second subframe (60) about a pivot connection (62);
a steering actuator (32) configured to cause the first and second subframes (58, 60) to pivot with respect to one another;
a steering angle sensor configured to provide data indicative of a machine steering angle;
a control unit (102) in communication with the steering angle sensor and the steering actuator (32), the control unit (102) being configured to control operation of the steering actuator (32) and to determine an operational stroke of the steering actuator (32),
a remote control (22) exterior to the compaction machine (50), the remote control (22) including a direction control (110) and a transmitter configured to transmit an operator-generated steering command from the direction control (110) to a receiver on the control unit (102) of the compaction machine (50);
wherein the control unit (102) is configured to control the steering actuator (32) based on the operator-generated steering command from the direction control (110) and the determined operational stroke of the steering actuator (32); and
**characterized in that**
the control unit (102) is configured to determine, based on input from the steering angle sensor, whether the steering actuator (32) is at a limit of its operational stroke and, if so, to override commands from the direction control (110) to alter the machine steering angle beyond that which results in the limit of the operational stroke of the steering actuator (32).

2. The compaction machine system of claim 1, wherein the receiver is configured to receive the input from the direction control (110) and transmit the input from the direction control (110) to the control unit (102).

3. The compaction machine system of claim 2, wherein the receiver comprises at least one of a radio receiver and an IR receiver.

4. The compaction machine system of claim 1, wherein the steering actuator (32) comprises at least one hydraulic cylinder.

5. The compaction machine system of claim 4, further comprising a source of pressurized hydraulic fluid, a reservoir, and a control valve that controls fluid flow between the hydraulic cylinder, the source of hydraulic fluid, and the reservoir; and
wherein the control valve is operated by the control unit (102) to control the operational stroke of the hydraulic cylinder.

6. The compaction machine system of claim 5, wherein the control valve is an on/off hydraulic solenoid valve or a proportional hydraulic solenoid valve, which would vary the speed at which the cylinder operates.

7. The compaction machine system of claim 4, wherein the steering angle senor is a position sensor that is configured to sense an angular orientation of the pivot connection; and
wherein the control unit (102) is configured to determine the stroke of the hydraulic cylinder based on the sensed angular orientation of the pivot connection.

8. The compaction machine of claim 1, wherein the control unit (102) is configured such that, in the absence of the operator-generated steering command, the control unit (102) adjusts the operational stroke of the steering actuator (32) to a neutral position resulting in straight-line travel.

9. A method of operating a compaction machine (50) having a mobile chassis (56) including a first subframe (58) pivotably connected to a second subframe (50) about a pivot connection and a steering actuator (32) configured to cause the first and second subframes (58, 60) to pivot relative to one another and turn the compaction machine (50), the method comprising:
providing a remote control (22) in communication with the compaction machine (50), the remote control (22) including a direction control (110) and a transmitter;
operating a control unit (102) of the compaction machine (50) to:
receive data indicative of a machine steering angle from a steering angle sensor;
determine an operational stroke of the steering actuator (32) based on the machine steering angle and orientation of the pivot connection;
receive an operator-generated steering command from the direction control (110) of the remote control (22) via the transmitter;
automatically adjust the operational stroke of the steering actuator (32) based on the operator-generated steering command from the direction control (110) of the remote control (22) and the determined stroke of the steering actuator (32); and
based on the data from the steering angle sensor, automatically return the steering actuator (32) to a neutral position in the absence of the operator-generated steering command,
wherein operating the control unit (102) of the compaction machine (50) further comprises determining, based on the data from the steering angle sensor, whether the steering actuator (32) is at a limit of its operational stroke and, if so, override commands from the direction control (110) that otherwise would attempt to alter the machine steering angle beyond that which results in the limit of the operational stroke of the steering actuator (32).

10. The method of claim 9, wherein operating the control unit (102) of the compaction machine (50) further comprises determining, based on the operator-generated steering command, whether the control unit (102) needs to adjust the operational stroke of the steering actuator (32) to turn the compaction machine (50), if not, maintain the operational stroke of the steering actuator (32).

11. The method of claim 9, wherein the steering actuator (32) is a hydraulic cylinder; and wherein adjusting the operational stroke of the steering actuator comprises operating a control valve to control the operational stroke of the hydraulic cylinder.

12. The method of claim 9, wherein receiving an operator-generated steering command from the direction control (110) of the remote control (22) comprises receiving at least one of a radio signal and an RF signal from a transmitter of the remote control (22).

## Patentansprüche

1. Verdichtungsmaschinensystem, aufweisend:
eine Verdichtungsmaschine (50), mit:
einem mobilen Fahrgestell (56), wobei das mobile Fahrgestell (56) einen ersten Unterrahmen (58) umfasst, der um eine Schwenkverbindung (62) schwenkbar mit einem zweiten Unterrahmen (60) verbunden ist;
einem Lenkaktuator (32), der konfiguriert ist, um zu bewirken, dass der erste und der zweite Unterrahmen (58, 60) in Bezug zueinander schwenken;
einem Lenkwinkelsensor, der konfiguriert ist, um Daten bereitzustellen, die einen Maschinenlenkwinkel angeben;
einer Steuereinheit (102) in Kommunikation mit dem Lenkwinkelsensor und dem Lenkaktuator (32), wobei die Steuereinheit (102) konfiguriert ist, um den Betrieb des Lenkaktuators (32) zu steuern und um einen Betriebshub des Lenkaktuators (32) zu bestimmen,
einer Fernsteuerung (22) außerhalb der Verdichtungsmaschine (50), wobei die Fernsteuerung (22) eine Richtungssteuerung (110) und einen Sender umfasst, der konfiguriert ist, um einen vom Bediener erzeugten Lenkbefehl von der Richtungssteuerung (110) an einen Empfänger an der Steuereinheit (102) der Verdichtungsmaschine (50) zu senden;
wobei die Steuereinheit (102) konfiguriert ist, um den Lenkaktuator (32) basierend auf dem vom Bediener erzeugten Lenkbefehl von der Richtungssteuerung (110) und dem bestimmten Betriebshub des Lenkaktuators (32) zu steuern; und
**dadurch gekennzeichnet, dass** die Steuereinheit (102) konfiguriert ist, um basierend auf einer Eingabe von dem Lenkwinkelsensor zu bestimmen, ob sich der Lenkaktuator (32) an einer Grenze seines Betriebshubs befindet, und, wenn dies der Fall ist, Befehle von der Richtungssteuerung (110) außer Kraft zu setzen, um den Maschinenlenkwinkel über den hinaus zu ändern, was zu der Grenze des Betriebshubs des Lenkaktuators (32) führt.

2. Verdichtungsmaschinensystem nach Anspruch 1, wobei der Empfänger konfiguriert ist, um die Eingabe von der Richtungssteuerung (110) zu empfangen und die Eingabe von der Richtungssteuerung (110) an die Steuereinheit (102) zu senden.

3. Verdichtungsmaschinensystem nach Anspruch 2, wobei der Empfänger mindestens eines von einem Funkempfänger und einem IR-Empfänger aufweist.

4. Verdichtungsmaschinensystem nach Anspruch 1, wobei der Lenkaktuator (32) mindestens einen Hydraulikzylinder aufweist.

5. Verdichtungsmaschinensystem nach Anspruch 4, ferner aufweisend eine Quelle von unter Druck stehendem Hydraulikfluid, einen Behälter und ein Steuerventil, das den Fluidfluss zwischen dem Hydraulikzylinder, der Quelle von Hydraulikfluid und dem Behälter steuert; und
wobei das Steuerventil durch die Steuereinheit (102) betätigt wird, um den Betriebshub des Hydraulikzylinders zu steuern.

6. Verdichtungsmaschinensystem nach Anspruch 5, wobei das Steuerventil ein hydraulisches Ein/Aus-Magnetventil oder ein proportionales hydraulisches Magnetventil ist, das die Geschwindigkeit, mit der der Zylinder arbeitet, variieren würde.

7. Verdichtungsmaschinensystem nach Anspruch 4, wobei der Lenkwinkelsensor ein Positionssensor ist, der konfiguriert ist, um eine Winkelausrichtung der Schwenkverbindung zu erfassen; und
wobei die Steuereinheit (102) konfiguriert ist, um den Hub des Hydraulikzylinders basierend auf der erfassten Winkelausrichtung der Schwenkverbindung zu bestimmen.

8. Verdichtungsmaschine nach Anspruch 1, wobei die Steuereinheit (102) so konfiguriert ist, dass in Abwesenheit des vom Bediener erzeugten Lenkbefehls die Steuereinheit (102) den Betriebshub des Lenkaktuators (32) auf eine neutrale Position einstellt, was zu einer geradlinigen Fahrt führt.

9. Verfahren zum Betreiben einer Verdichtungsmaschine (50) mit einem mobilen Fahrgestell (56) mit einem ersten Unterrahmen (58), der um eine Schwenkverbindung schwenkbar mit einem zweiten Unterrahmen (50) verbunden ist, und einem Lenkaktuator (32), der konfiguriert ist, um zu bewirken, dass der erste und der zweite Unterrahmen (58, 60) relativ zueinander schwenken und die Verdichtungsmaschine (50) drehen, wobei das Verfahren aufweist:
Bereitstellen einer Fernsteuerung (22) in Kommunikation mit der Verdichtungsmaschine (50), wobei die Fernsteuerung (22) eine Richtungssteuerung (110) und einen Sender umfasst;
Betreiben einer Steuereinheit (102) der Verdichtungsmaschine (50), um:
Daten zu empfangen, die einen Maschinenlenkwinkel von einem Lenkwinkelsensor angeben;
einen Betriebshub des Lenkaktuators (32) basierend auf dem Maschinenlenkwinkel und der Ausrichtung der Schwenkverbindung zu bestimmen;
einen vom Bediener erzeugten Lenkbefehl von der Richtungssteuerung (110) der Fernsteuerung (22) über den Sender zu empfangen;
den Betriebshub des Lenkaktuators (32) basierend auf dem vom Bediener erzeugten Lenkbefehl von der Richtungssteuerung (110) der Fernsteuerung (22) und dem bestimmten Hub des Lenkaktuators (32) automatisch anzupassen; und
basierend auf den Daten von dem Lenkwinkelsensor den Lenkaktuator (32) in Abwesenheit des vom Bediener erzeugten Lenkbefehls automatisch in eine neutrale Position zurückzubringen,
wobei das Betreiben der Steuereinheit (102) der Verdichtungsmaschine (50) ferner das Bestimmen basierend auf den Daten von dem Lenkwinkelsensor aufweist, ob sich der Lenkaktuator (32) an einer Grenze seines Betriebshubs befindet, und, wenn dies der Fall ist, Befehle von der Richtungssteuerung (110) außer Kraft zu setzen, die ansonsten versuchen würden, den Maschinenlenkwinkel darüber hinaus zu ändern, was zu der Grenze des Betriebshubs des Lenkaktuators (32) führt.

10. Verfahren nach Anspruch 9, wobei das Betreiben der Steuereinheit (102) der Verdichtungsmaschine (50) ferner das Bestimmen basierend auf dem vom Bediener erzeugten Lenkbefehl aufweist, ob die Steuereinheit (102) den Betriebshub des Lenkaktuators (32) anpassen muss, um die Verdichtungsmaschine (50) zu drehen, wenn nicht, den Betriebshub des Lenkaktuators (32) beizubehalten.

11. Verfahren nach Anspruch 9, wobei der Lenkaktuator (32) ein Hydraulikzylinder ist; und wobei das Anpassen des Betriebshubs des Lenkaktuators das Betätigen eines Steuerventils umfasst, um den Betriebshub des Hydraulikzylinders zu steuern.

12. Verfahren nach Anspruch 9, wobei das Empfangen eines vom Bediener erzeugten Lenkbefehls von der Richtungssteuerung (110) der Fernsteuerung (22) das Empfangen mindestens eines von einem Funksignal und einem RF-Signal von einem Sender der Fernsteuerung (22) aufweist.

## Revendications

1. Système de machine de compactage comprenant :
une machine de compactage (50) incluant :
un châssis mobile (56), le châssis mobile (56) incluant un premier sous-cadre (58) relié de manière pivotante à un deuxième sous-cadre (60) autour d'une liaison pivot (62) ;
un actionneur de braquage (32) configuré pour amener les premier et deuxième sous-cadres (58, 60) à pivoter l'un par rapport à l'autre ;
un capteur d'angle de braquage configuré pour fournir des données indiquant un angle de braquage de machine ;
une unité de commande (102) en communication avec le capteur d'angle de braquage et l'actionneur de braquage (32), l'unité de commande (102) étant configurée pour commander le fonctionnement de l'actionneur de braquage (32) et pour déterminer une course opérationnelle de l'actionneur de braquage (32),
une télécommande (22) extérieure à la machine de compactage (50), la télécommande (22) incluant une commande de direction (110) et un émetteur configuré pour transmettre une instruction de braquage générée par l'opérateur à partir de la commande de direction (110) à un récepteur sur l'unité de commande (102) de la machine de compactage (50) ;
dans lequel l'unité de commande (102) est configurée pour commander l'actionneur de braquage (32) sur la base de l'instruction de braquage générée par l'opérateur à partir de la commande de direction (110) et de la course opérationnelle déterminée de l'actionneur de braquage (32) ; et
**caractérisé en ce que** l'unité de commande (102) est configurée pour déterminer, sur la base d'une entrée provenant du capteur d'angle de braquage, si l'actionneur de braquage (32) est à une limite de sa course opérationnelle et, le cas échéant, pour outrepasser les instructions provenant de la commande de direction (110) pour modifier l'angle de braquage de machine au-delà de ce qui se traduit par la limite de la course opérationnelle de l'actionneur de braquage (32).

2. Système de machine de compactage selon la revendication 1, dans lequel le récepteur est configuré pour recevoir l'entrée provenant de la commande de direction (110) et transmettre l'entrée provenant de la commande de direction (110) à l'unité de commande (102).

3. Système de machine de compactage selon la revendication 2, dans lequel le récepteur comprend au moins l'un d'un récepteur radio et d'un récepteur IR.

4. Système de machine de compactage selon la revendication 1, dans lequel l'actionneur de braquage (32) comprend au moins un vérin hydraulique.

5. Système de machine de compactage selon la revendication 4, comprenant en outre une source de fluide hydraulique sous pression, un réservoir et une vanne de régulation qui régule l'écoulement de fluide entre le vérin hydraulique, la source de fluide hydraulique et le réservoir ; et
dans lequel la vanne de régulation est actionnée par l'unité de commande (102) pour commander la course opérationnelle du vérin hydraulique.

6. Système de machine de compactage selon la revendication 5, dans lequel la vanne de régulation est une électrovanne hydraulique marche/arrêt ou une électrovanne hydraulique proportionnelle, qui ferait varier la vitesse à laquelle fonctionne le vérin.

7. Système de machine de compactage selon la revendication 4, dans lequel le capteur d'angle de braquage est un capteur de position qui est configuré pour détecter une orientation angulaire de la liaison pivot ; et
dans lequel l'unité de commande (102) est configurée pour déterminer la course du vérin hydraulique sur la base de l'orientation angulaire détectée de la liaison pivot.

8. Machine de compactage selon la revendication 1, dans laquelle l'unité de commande (102) est configurée de telle sorte que, en l'absence d'instruction de braquage générée par l'opérateur, l'unité de commande (102) règle la course opérationnelle de l'actionneur de braquage (32) en position neutre, ce qui se traduit par un déplacement en ligne droite.

9. Procédé de fonctionnement d'une machine de compactage (50) ayant un châssis mobile (56) incluant un premier sous-cadre (58) relié de manière pivotante à un deuxième sous-cadre (50) autour d'une liaison pivot et un actionneur de braquage (32) configuré pour amener les premier et deuxième sous-cadres (58, 60) à pivoter l'un par rapport à l'autre et faire tourner la machine de compactage (50), le procédé comprenant :
la fourniture d'une télécommande (22) en communication avec la machine de compactage (50), la télécommande (22) incluant une commande de direction (110) et un émetteur ;
le fonctionnement d'une unité de commande (102) de la machine de compactage (50) pour :
recevoir des données indiquant un angle de braquage de machine à partir d'un capteur d'angle de braquage ;
déterminer la course opérationnelle de l'actionneur de braquage (32) sur la base de l'angle de braquage de machine et de l'orientation de la liaison pivot ;
recevoir une instruction de braquage générée par l'opérateur à partir de la commande de direction (110) de la télécommande (22) via l'émetteur ;
régler automatiquement la course opérationnelle de l'actionneur de braquage (32) sur la base de l'instruction de braquage générée par l'opérateur provenant de la commande de direction (110) de la télécommande (22) et de la course déterminée de l'actionneur de braquage (32) ; et
sur la base des données provenant du capteur d'angle de braquage, ramener automatiquement l'actionneur de braquage (32) en position neutre en l'absence de l'instruction de braquage générée par l'opérateur,
dans lequel le fonctionnement de l'unité de commande (102) de la machine de compactage (50) comprend en outre le fait de déterminer, sur la base des données provenant du capteur d'angle de braquage, si l'actionneur de braquage (32) est à une limite de sa course opérationnelle et, le cas échéant, outrepasser les instructions provenant de la commande de direction (110) qui, autrement, tenteraient de modifier l'angle de braquage de machine au-delà de ce qui se traduit par la limite de la course opérationnelle de l'actionneur de braquage (32).

10. Procédé selon la revendication 9, dans lequel le fonctionnement de l'unité de commande (102) de la machine de compactage (50) comprend en outre le fait de déterminer, sur la base de l'instruction de braquage générée par l'opérateur, si l'unité de commande (102) doit régler la course opérationnelle de l'actionneur de braquage (32) pour faire tourner la machine de compactage (50) ; sinon, maintenir la course opérationnelle de l'actionneur de braquage (32).

11. Procédé selon la revendication 9, dans lequel l'actionneur de braquage (32) est un vérin hydraulique ;
et dans lequel le réglage de la course opérationnelle de l'actionneur de braquage comprend le fonctionnement d'une vanne de régulation pour réguler la course opérationnelle du vérin hydraulique.

12. Procédé selon la revendication 9, dans lequel la réception d'une instruction de braquage générée par l'opérateur à partir de la commande de direction (110) de la télécommande (22) comprend la réception d'au moins l'un d'un signal radio et d'un signal RF à partir d'un émetteur de la télécommande (22).
